# EUROPÄISCHE PATENTSCHRIFT

(11) **EP 2 321 997 B1**
(45) Veröffentlichungstag und Bekanntmachung des Hinweises auf die Patenterteilung: **31.10.2012**
(21) Anmeldenummer: 10708515.1
(22) Anmeldetag: 03.03.2010
(51) Int. Cl.: H04W 40/26, H04W 84/18

(54) **VERFAHREN ZUM AUSTAUSCH VON ROUTING-NACHRICHTEN IN EINEM DRAHTLOSEN VERMASCHTEN KOMMUNIKATIONSNETZ**
METHOD FOR EXCHANGING ROUTING MESSAGES IN A WIRELESS MESHED COMMUNICATION NETWORK
PROCÉDÉ D'ÉCHANGE D'INFORMATIONS DE ROUTAGE DANS UN RÉSEAU DE COMMUNICATION SANS FIL MAILLÉ

(30) Priorität: 06.03.2009 EP 09003270
(43) Veröffentlichungstag der Anmeldung: 18.05.2011
(73) Patentinhaber: Siemens Aktiengesellschaft, 80333 München (DE)
(72) Erfinder: BAHR, Michael, 81827 München (DE)
(86) Internationale Anmeldenummer: PCT/EP2010/052652
(87) Internationale Veröffentlichungsnummer: WO 2010/100172

(56) Entgegenhaltungen:
- WO-A1-2008/058933
- MICHAEL BAHR ED - REZA SHOKRI ET AL: "Update on the Hybrid Wireless Mesh Protocol of IEEE 802.11s" MOBILE ADHOC AND SENSOR SYSTEMS, 2007. MASS 2007. IEEE INTERNATONAL CO NFERENCE ON, IEEE, PI, 1. Oktober 2007 (2007-10-01) , Seiten 1-6, XP031200980 ISBN: 978-1-4244-1454-3

## Beschreibung

Die Erfindung betrifft ein Verfahren zum Austausch von Routing-Nachrichten in einem drahtlosen vermaschten Kommunikationsnetz mit einer Mehrzahl von Netzknoten, sowie einen entsprechenden Netzknoten und ein drahtloses vermaschtes Kommunikationsnetz.

Aus dem Stand der Technik ist eine Vielzahl von unterschiedlichen Mechanismen bekannt, wie in Kommunikationsnetzen mit einer Mehrzahl von Netzknoten Daten entlang von Pfaden in dem Netz weitergeleitet werden können. In der Druckschrift WO 2008/058933 A1 wird ein Verfahren zum Einrichten bidirektionaler Datenübertragungspfade in einem drahtlosen vermaschten Kommunikationsnetz mit einer Mehrzahl von Netzknoten beschrieben. Dabei ist ein Routing-Baum ausgehend von einem als Root-Netzknoten fungierenden Knoten zwischen den drahtlos kommunizierenden Netzknoten eingerichtet, wobei der Root-Knoten zum Einrichten des Routing-Baums in regelmäßigen Zeitabständen Routing-Anfragen an den Netzknoten aussendet. Über die Routing-Anfragen wird dabei zunächst ein unidirektionaler Datenübertragungspfad von den jeweiligen Netzknoten im Routing-Baum hin zum Root-Knoten aufgebaut. Durch die Verwendung von zwei Flags in den jeweiligen Netzknoten kann erreicht werden, dass unter bestimmten Umständen in Antwort auf eine empfangene Routing-Anfrage auch eine Routing-Antwort an den Root-Knoten zurückgesendet wird, was dem Aufbau eines Rückpfads vom Root-Netzknoten zum die Routing-Antwort aussendenden Netzknoten bewirkt. Hierdurch kann bei Bedarf ein bidirektionaler Datenübertragungspfad zwischen Root-Netzknoten und dem die Routing-Antwort sendenden Netzknoten eingerichtet werden. In dieser Druckschrift wird nicht spezifiziert, wie über den Root-Knoten ein Wechsel zwischen einem Modus, in dem bidirektionale Datenpfade eingerichtet werden, und einem Modus, in dem nur unidirektionale Datenpfade eingerichtet werden, ausgelöst werden kann.

In dem Standard IEEE 802.11s, der eine Datenübertragung in der L2-Schicht in drahtlosen vermaschten Netzwerken beschreibt, wird zum Aufbau von Datenübertragungspfaden das HWMP-Protokoll (HWMP = Hybrid Wireless Mesh Protocol) beschrieben. Mit diesem Protokoll wird proaktiv ein Routing-Baum mit Hilfe von Routing-Anfragen eingerichtet, welche von einem entsprechenden Root-Knoten im Routing-Baum ausgesendet werden. Über ein Flag in den Routing-Anfragen wird dabei spezifiziert, ob in Antwort auf den Empfang einer Routing-Anfrage in einem Netzknoten eine entsprechende Routing-Antwort ausgesendet werden soll, d.h. ob ein Modus zum Aufbau von unidirektionalen oder bidirektionalen Datenübertragungspfaden verwendet werden soll. Es findet sich keine Beschreibung, wie durch das Setzen von Flags in den Netzknoten ohne explizite Berücksichtigung des Modus in der Routing-Anfrage zwischen den Modi gewechselt werden kann.

Aufgabe der Erfindung ist es deshalb, in einem drahtlosen vermaschten Kommunikationsnetz einen Austausch von Routing-Nachrichten damit zu ermöglichen, dass in einem einheitlichen Verfahren zwischen einem Modus mit unidirektionaler Datenübertragung und einem Modus mit bidirektionaler Datenübertragung gewechselt wird.

Diese Aufgabe wird durch das Verfahren gemäß Patentanspruch 1 bzw. den Netzwerkknoten gemäß Patentanspruch 10 bzw. das Kommunikationsnetz gemäß Patentanspruch 12 gelöst. Weiterbildungen der Erfindung sind in den abhängigen Ansprüchen definiert.

In dem erfindungsgemäßen Verfahren werden Routing-Nachrichten in einem drahtlosen vermaschten Kommunikationsnetz mit einer Mehrzahl von Netzknoten ausgetauscht, wobei in dem Kommunikationsnetz ein Routing-Baum mit Datenübertragungspfaden zwischen den Netzknoten aufgebaut wird und einer der Netzknoten ein Root-Knoten ist, der die Wurzel des Routing-Baums darstellt. Hier und im Folgenden werden Knoten im Kommunikationsnetz, welche nicht dem Root-Knoten entsprechen, als Netzknoten bezeichnet, wohingegen der als Root-Knoten fungierende Netzknoten immer explizit als Root-Knoten benannt wird.

Zum Aufbau der Datenübertragungspfade sendet der Root-Knoten in regelmäßigen Zeitabständen an die Netzknoten Routing-Anfragen. Die Routing-Anfragen werden dabei in dem Kommunikationsnetz von den Netzknoten weitergeleitet. Hierdurch werden mit an sich bekannten Verfahren entsprechende Routing-Informationen in den einzelnen Netzknoten spezifiziert, mit denen das Weiterleiten von Datenpaketen von einem Netzknoten zum Nächsten hin zum Root-Knoten über festgelegte Datenübertragungspfade ermöglicht wird. In dem erfindungsgemäßen Verfahren sind in einer jeweiligen Routing-Anfrage ein erster und ein zweiter Modus spezifiziert. Der erste Modus entspricht dabei einem Modus zum Aufbau von bidirektionalen Datenübertragungspfaden zwischen Root-Knoten und jeweiligem Netzknoten. Der zweite Modus ist demgegenüber ein Modus zum Aufbau von unidirektionalen Datenübertragungspfaden vom jeweiligen Netzknoten zum Root-Knoten. Insbesondere zeichnet sich der erste Modus dadurch aus, dass nach Einrichten des ersten Modus im Kommunikationsnetz ein jeweiliger Netzknoten immer eine Routing-Antwort in Reaktion auf einen Empfang einer Routing-Anfrage an den Root-Knoten sendet. Demgegenüber ist der zweite Modus insbesondere dadurch charakterisiert, dass nach Einrichten des zweiten Modus im Kommunikationsnetz ein jeweiliger Netzknoten nicht immer eine Routing-Antwort in Reaktion auf einen Empfang einer Routing-Anfrage an den Root-Knoten aussendet. Unter dem Begriff "nach Einrichten des ersten bzw. zweiten Modus" ist zu verstehen, dass gerade kein Moduswechsel durchgeführt wird, bei dem unter Umständen für eine gewisse Zeit die spezifizierten Bedingungen für den ersten bzw. den zweiten Modus noch nicht vorliegen.

In dem oben beschriebenen ersten Modus wird erreicht, dass nach Empfang einer Routing-Anfrage in einem Netzknoten, welche den Aufbau eines Datenübertragungspfads von dem Netzknoten zu dem Root-Knoten zur Folge hat, auch in der Gegenrichtung mittels ausgesendeter Routing-Antworten ein Pfad aufgebaut wird, so dass bidirektionale Datenübertragungspfade im Routing-Baum vorliegen. Dies ist im zweiten Modus nicht der Fall, da hier in Reaktion auf den Empfang einer Routing-Anfrage in der Regel keine Routing-Antwort von einem Netzknoten gesendet wird. Nichtsdestotrotz besteht auch im zweiten Modus die Möglichkeit, entsprechende Routing-Antworten auszusenden, jedoch ist das Aussenden dieser Routing-Antworten - im Unterschied zum ersten Modus - nicht bzw. nur ausnahmsweise bzw. bedarfsweise an den Empfang einer Routing-Anfrage gekoppelt.

In dem erfindungsgemäßen Verfahren wird in einem jeweiligen Netzknoten über ein erstes Feld ein erster oder ein zweiter Zustand des jeweiligen Netzknotens angezeigt. Dieses erste Feld spezifiziert das Aussenden von Routing-Antworten - und zwar unabhängig von dem in der Routing-Anfrage spezifizierten ersten oder zweiten Modus. Erfindungsgemäß wird im Falle, dass bei Empfang einer Routing-Anfrage in einem jeweiligen Netzknoten das erste Feld des jeweiligen Netzknotens in dem ersten Zustand ist, immer eine Routing-Antwort, d.h. unabhängig von dem spezifizierten Modus in der Routing-Anfrage, von dem jeweiligen Netzknoten ausgesendet. Ansonsten, d.h. wenn das erste Feld in dem zweiten Zustand ist, wird keine Routing-Antwort von dem jeweiligen Netzknoten ausgesendet. Anschließend wird durch den jeweiligen Netzknoten der in der empfangenen Routing-Anfrage spezifizierte Modus überprüft. Dabei wird sichergestellt, dass das erste Feld nach der Überprüfung in dem ersten Zustand ist, falls die empfangene Routing-Antwort den ersten Modus spezifiziert. Dies kann z.B. durch Setzen des ersten Felds in den ersten Zustand (unabhängig vom aktuellen Zustand des Felds) erreicht werden. Ansonsten, d.h. wenn in der Routing-Anfrage der zweite Modus spezifiziert ist, wird sichergestellt, dass das erste Feld in dem zweiten Zustand ist. Dies kann beispielsweise durch ein Setzen des ersten Felds in den zweiten Zustand erreicht werden oder dadurch, dass ein bereits vor der Überprüfung des Modus in den zweiten Zustand gesetztes erstes Feld nicht mehr verändert wird.

Darüber hinaus wird in dem erfindungsgemäßen Verfahren durch einen jeweiligen Netzknoten im Falle einer Datenübertragung von dem jeweiligen Netzknoten hin zum Root-Knoten sichergestellt, dass das erste Feld des jeweiligen Netzknotens anschließend (d.h. nach der Datenübertragung) in dem ersten Zustand ist. Dies kann z.B. durch das Setzen des ersten Felds (unabhängig von dessen aktuellem Zustand) in den ersten Zustand erreicht werden.

Das erfindungsgemäße Verfahren ermöglicht ohne eine explizite Festlegung von Modi in den einzelnen Netzknoten den Betrieb in einem ersten Modus mit bidirektionalen Datenübertragungspfaden und einem zweiten Modus mit unidirektionalen Datenübertragungspfaden. Darüber hinaus wird unabhängig vom Modus im Falle einer Datenübertragung gewährleistet, dass für die übertragenen Daten auch ein Rückpfad von dem Root-Knoten zu dem entsprechenden Netzknoten aufgebaut wird.

In einer besonders bevorzugten Ausführungsform des erfindungsgemäßen Verfahrens wird in einen jeweiligen Netzknoten neben dem ersten Feld ein zweites Feld verwendet, über das ein dritter oder ein vierter Zustand des Netzknotens angezeigt werden, wobei der jeweilige Netzknoten das zweite Feld nach dem Aussenden einer Routing-Antwort in den dritten Zustand setzt.

In einer ersten Ausführungsform des erfindungsgemäßen Verfahrens werden in einem jeweiligen Netzknoten in Reaktion auf den Empfang einer Routing-Anfrage immer folgende Schritte a) bis c) nacheinander ausgeführt:
a) Setzen des zweiten Felds des jeweiligen Netzknotens in den vierten Zustand;
b) Überprüfen, in welchem Zustand das erste Feld des jeweiligen Netzknotens ist, wobei
   - falls das erste Feld in dem ersten Zustand ist, von dem jeweiligen Netzknoten eine Routing-Antwort ausgesendet wird und anschließend das erste Feld in den zweiten Zustand gesetzt wird und das zweite Feld in den dritten Zustand gesetzt wird;
   - falls das erste Feld in dem zweiten Zustand ist, von dem jeweiligen Netzknoten keine Routing-Antwort ausgesendet wird und der Zustand des ersten Felds und des zweiten Felds unverändert bleibt;
c) Überprüfen, welcher Modus in der empfangenen Routing-Anfrage spezifiziert ist, wobei
   - falls in der empfangenen Routing-Anfrage der erste Modus spezifiziert ist, das erste Feld in den ersten Zustand gesetzt wird und das zweite Feld unverändert bleibt;
   - falls in der empfangenen Routing-Anfrage der zweite Modus spezifiziert ist, der Zustand des ersten Felds und des zweiten Felds unverändert bleiben.

In einer alternativen Ausführungsform des erfindungsgemäßen Verfahrens werden in einem jeweiligen Netzknoten in Reaktion auf den Empfang einer Routing-Anfrage immer folgende Schritte i) und ii) nacheinander ausgeführt:
i) Überprüfen, in welchem Zustand das erste Feld des jeweiligen Netzknotens ist, wobei
   - falls das erste Feld in dem ersten Zustand ist, von dem jeweiligen Netzknoten eine Routing-Antwort ausgesendet wird, das zweite Feld des jeweiligen Netzknotens in den dritten Zustand gesetzt wird und das erste Feld unverändert bleibt;
   - falls das erste Feld in dem zweiten Zustand ist, von dem jeweiligen Netzknoten keine Routing-Antwort ausgesendet wird und das zweite Feld in den vierten Zustand gesetzt wird und das erste Feld unverändert bleibt;
ii) Überprüfen, welcher Modus in der empfangenen Routing-Anfrage spezifiziert ist, wobei
   - falls in der empfangenen Routing-Anfrage der erste Modus spezifiziert ist, das erste Feld in den ersten Zustand gesetzt wird und das zweite Feld unverändert bleibt;
   - falls in der empfangenen Routing-Anfrage der zweite Modus spezifiziert ist, das erste Feld in den zweiten Zustand gesetzt wird und das zweite Feld unverändert bleibt.

In einer weiteren Ausführungsform des erfindungsgemäßen Verfahrens führt ein jeweiliger Netzknoten in Abhängigkeit von einem oder mehreren Kriterien und insbesondere immer folgenden Schritt durch:
Senden einer Routing-Antwort vor Beginn einer Datenübertragung von dem jeweiligen Netzknoten an den Root-Knoten, falls das zweite Feld des jeweiligen Netzknotens in dem vierten Zustand ist. Auf diese Weise wird sichergestellt, dass bereits vor der Datenübertragung durch das Aussenden der Routing-Antwort ein Rückpfad von dem Root-Knoten zu dem jeweiligen Netzknoten aufgebaut wird. Durch das oder die Kriterien wird somit spezifiziert, ob der jeweilige Netzknoten den Aufbau eines Rückpfads und damit eines bidirektionalen Datenübertragungspfads zum Zeitpunkt der Datenübertragung wünscht.

In einer weiteren Ausführungsform des erfindungsgemäßen Verfahrens wird eine Verzögerung beim Aussenden der Routing-Antwort beim Wechsel von dem zweiten in den ersten Modus vermieden. Dies wird dadurch erreicht, dass bei Vorliegen der Bedingung, dass in einem jeweiligen Netzknoten eine Routing-Anfrage mit spezifiziertem ersten Modus empfangen wird und das erste Feld im zweiten Zustand ist, eine Routing-Antwort in Reaktion auf die empfangene Routing-Anfrage von dem jeweiligen Netzknoten ausgesendet wird. Gemäß den oben beschriebenen Varianten, bei denen ferner ein zweites Feld in dem jeweiligen Netzknoten definiert ist, wird bei Vorliegen dieser Bedingung ferner nach dem Aussenden der Routing-Antwort in dem jeweiligen Netzknoten das erste Feld in den ersten Zustand gesetzt und das zweite Feld in den dritten Zustand.

Das erfindungsgemäße Verfahren wird insbesondere in einem Kommunikationsnetz eingesetzt, welches nach dem Standard IEEE 802.11s arbeitet. Dabei stellen die Routing-Anfragen bzw. die Routing-Antworten proaktive Path-Requests bzw. Path-Replies gemäß dem dort definierten HWMP-Protokoll dar.

In einer weiteren Ausführungsform des erfindungsgemäßen Verfahrens werden der erste und zweite Modus in der Routing-Anfrage und/oder der erste und zweite Zustand in dem ersten Feld eines jeweiligen Netzknotens und/oder der dritte und vierte Zustand in dem zweiten Feld eines jeweiligen Netzknotens mit dem Zustand eines Flags spezifiziert. Dabei wird ein Zustand durch das gesetzte Flag und der andere Zustand durch das nicht gesetzte Flag angezeigt.

Neben dem oben beschriebenen Verfahren betrifft die Erfindung ferner einen Netzknoten zur Verwendung in einem drahtlosen vermaschten Kommunikationsnetz, in dem das erfindungsgemäße Verfahren durchgeführt wird, wobei in dem Kommunikationsnetz ein Routing-Baum mit Datenübertragungspfaden zwischen den Netzknoten aufgebaut wird und einer der Netzknoten ein Root-Knoten ist, der die Wurzel des Routing-Baums darstellt. Der Netzknoten umfasst dabei: ein erstes Mittel zum Empfangen von Routing-Anfragen, die der Root-Knoten in regelmäßigen Zeitabständen an die Netzknoten zum Aufbau der Datenübertragungspfade aussendet, wobei in einer jeweiligen Routing-Anfrage ein erster Modus zum Aufbau bidirektionaler Datenübertragungspfade und ein zweiter Modus zum Aufbau unidirektionaler Datenübertragungspfade spezifiziert ist. Der Netzknoten umfasst ferner ein zweites Mittel zum Setzen eines ersten oder zweiten Zustands in einem ersten Feld. Darüber hinaus ist ein drittes Mittel zum Aussenden von Routing-Antworten vorgesehen, wobei dieses dritte Mittel derart ausgestaltet ist, dass, falls bei Empfang einer Routing-Anfrage durch das erste Mittel das erste Feld des Netzknotens in dem ersten Zustand ist, immer eine Routing-Antwort durch das dritte Mittel ausgesendet wird, wobei ansonsten keine Routing-Antwort durch das dritte Mittel ausgesendet wird, wobei anschließend der in der empfangenen Routing-Anfrage spezifizierte Modus überprüft wird und sichergestellt wird, dass das erste Feld in dem ersten Zustand ist, falls die empfangene Routing-Anfrage den ersten Modus spezifiziert, und ansonsten sichergestellt wird, dass das erste Feld in dem zweiten Zustand ist, wobei ferner sichergestellt wird, dass im Falle einer Datenübertragung von dem Netzknoten hin zum Root-Knoten das erste Feld im ersten Zustand ist.

Der gerade beschriebene Netzknoten ist vorzugsweise derart ausgestaltet, dass er ein oder mehrere weitere Mittel zur Durchführung jeder Variante des oben beschriebenen erfindungsgemäßen Verfahrens umfasst.

Die Erfindung betrifft darüber hinaus ein drahtloses vermaschtes Kommunikationsnetz mit einer Mehrzahl von Netzknoten, in dem die Netzknoten zur Durchführung des erfindungsgemäßen Verfahrens eingerichtet sind.

Ausführungsbeispiele der Erfindung werden nachfolgend anhand der beigefügten Figuren detailliert beschrieben.

Es zeigen:
- Fig. 1: eine schematische Darstellung eines vermaschten drahtlosen paketvermittelten Kommunikationsnetzes, in dem Routing-Nachrichten basierend auf Ausführungsformen des erfindungsgemäßen Verfahrens ausgetauscht werden;
- Fig. 2: ein zeitliches Ablaufdiagramm, welches das Aussenden und Empfangen von Routing-Nachrichten und Daten in dem ersten Modus basierend auf einer ersten Ausführungsform des erfindungsgemäßen Verfahrens verdeutlicht;
- Fig. 3: ein zeitliches Ablaufdiagramm, welches das Aussenden und Empfangen von Routing-Nachrichten und Daten in dem ersten Modus basierend auf einer zweiten Ausführungsform des erfindungsgemäßen Verfahrens verdeutlicht;
- Fig. 4: ein zeitliches Ablaufdiagramm, welches das Aussenden und Empfangen von Routing-Nachrichten und Daten gemäß der ersten Ausführungsform des erfindungsgemäßen Verfahrens in dem ersten und zweiten Modus verdeutlicht; und
- Fig. 5: ein zeitliches Ablaufdiagramm, welches das Aussenden und Empfangen von Routing-Nachrichten und Daten gemäß der zweiten Ausführungsform des erfindungsgemäßen Verfahrens in dem ersten und zweiten Modus verdeutlicht.

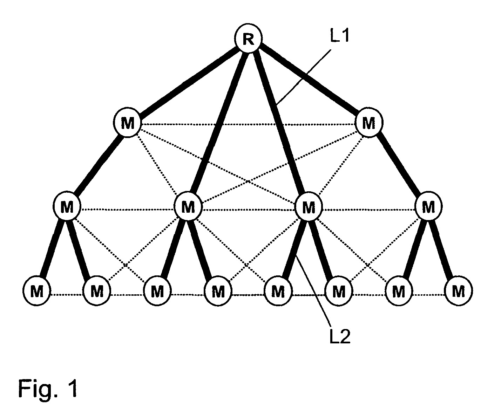

Fig. 1 zeigt in schematischer Darstellung ein vermaschtes drahtloses Kommunikationsnetz, in dem zum Routing von Datenpaketen Ausführungsformen gemäß dem erfindungsgemäßen Verfahren verwendet werden. Das Kommunikationsnetz umfasst eine Vielzahl von Netzknoten, welche als Kreise angedeutet sind, wobei die Netzknoten untereinander drahtlos kommunizieren können. Die Kommunikationspfade zwischen den Netzknoten sind zum einen als durchgezogene Linien und zum anderen als gestrichelte Linien angedeutet. Das Kommunikationsnetz der Fig. 1 beruht auf dem Standard IEEE 802.11s, der den Datenaustausch in der L2-Schicht in vermaschten Kommunikationsnetzen spezifiziert. Zum Weiterleiten der Datenpakete wird dabei das Pfad-Auswahl-Protokoll HWMP (HWMP = Hybrid Wireless Mesh Protocol) verwendet, welches gemäß den nachfolgenden Ausführungsformen im sog. "Proactive Tree Building Mode" betrieben wird. Dabei wird ein Routing-Baum ausgehend von einem Wurzel-Netzknoten zu den restlichen Netzknoten des Kommunikationsnetzes aufgebaut. Ein solcher Routing-Baum ist in Fig. 1 durch die durchgezogenen schwarzen Linien angedeutet, wobei der Wurzel-Knoten mit Bezugszeichen R bezeichnet ist und alle anderen Knoten mit Bezugszeichen M bezeichnet sind. Im Folgenden wird die Bezeichnung "Netzknoten" immer für die vom Root-Knoten R abhängigen Knoten M verwendet, wohingegen der Wurzel-Knoten immer als Root-Knoten bezeichnet wird.

Der dargestellte Routing-Baum wird in dem genannten Tree-Building-Mode proaktiv über das Aussenden sog. proaktiver Routing-Anfragen aufgebaut, welche im HWMP-Protokoll als proaktive Path-Requests PREQ bezeichnet sind. Diese proaktiven Routing-Anfragen werden periodisch durch den Root-Netzknoten R ausgesendet und stellen eine spezielle Path-Request-Nachricht im HWMP-Protokoll dar, in der die Felder der Zieladresse alle auf "1" gesetzt sind (entspricht der sog. Broadcast-Adresse) und das sog. Target-Only-Flag sowie das Reply-And-Forward-Flag ebenfalls auf "1" gesetzt sind. Dies hat zur Folge, dass die Routing-Anfragen Broadcast-Nachrichten darstellen, welche von jedem der empfangenden Netzknoten M verarbeitet werden. Die Einrichtung des Routing-Baums basierend auf diesen Routing-Anfragen erfolgt mit Standardmechanismen unter Verwendung von Distanzvektoren und Link-State-Protokollen, wie sie im oben genannten Routing-Protokoll HWMP des Standards IEEE 802.11s vorgesehen sind. In jedem Netzknoten M sind dabei Weiterleitungs-Informationen hinterlegt, welche basierend auf den periodisch empfangenen Routing-Anfragen aktualisiert werden. Über die Weiterleitungs-Informationen wird der kürzeste Pfad eines Netzknotens M zum Root-Knoten R spezifiziert. Dabei ist in jedem Netzknoten M hinterlegt, an welchem nächsten Netzknoten er empfangene Datenpakete weiterleitet.

Über die periodisch vom Root-Knoten R ausgesendeten Routing-Anfragen werden unidirektionale Datenübertragungspfade von den einzelnen Netzknoten M hin zum Root-Knoten R eingerichtet. Ein solcher Datenübertragungspfad wird in Fig. 1 beispielhaft durch die Pfadabschnitte L1 und L2 angedeutet, über welche ein Netzknoten in der untersten Hierarchieebene Datenpakete an den Root-Knoten R sendet. Der oben genannte Tree-Building-Mode zum Aufbau der Datenübertragungspfade enthält einen ersten Modus und einen zweiten Modus, welche spezifizieren, ob einzelne Netzknoten M in Reaktion auf empfangene Routing-Anfragen proaktive Routing-Antworten, welche im HWMP-Standard als proaktive Path-Replies PREP bezeichnet werden, hin zum Root-Knoten R aussenden, um auch in der Gegenrichtung, d.h. vom Root-Knoten R hin zum Knoten M, einen Datenübertragungspfad aufzubauen, wodurch bidirektionale Datenübertragungspfade zwischen dem Root-Knoten R und den jeweiligen Netzknoten M gebildet werden. Der erste Modus ist dabei der Modus "proaktiver Path-Request PREQ mit proaktiver Path-Reply PREP", wonach ein jeweiliger Netzknoten zum Aufbau bidirektionaler Datenübertragungspfade bei Empfang einer Routing-Anfrage mit einer entsprechenden Routing-Antwort antwortet. Der zweite Modus ist der Modus "proaktiver Path-Request PREQ ohne proaktive Path-Reply PREP". Nach Einrichten dieses Modus ist das Aussenden einer Routing-Antwort nicht bzw. nur bedarfsweise an den Empfang einer Routing-Anfrage vom Root-Netzknoten gekoppelt. Das heißt, das Aussenden einer Routing-Antwort erfolgt in der Regel nicht in Reaktion auf den Empfang einer Routing-Anfrage. Vielmehr wird eine solche Routing-Antwort nur bei Bedarf ausgesendet, d.h. wenn ein bidirektionaler Datenpfad zwischen Root-Knoten R und dem jeweiligen Netzknoten M benötigt wird.

Zur Unterscheidung des soeben beschriebenen ersten und zweiten Modus ist in den Routing-Anfragen des Root-Knotens R ein Flag enthalten, welches anzeigt, ob der erste Modus oder der zweite Modus vorliegt. Dieses Flag wird im Folgenden als PREP-Flag bezeichnet, wobei in der hier beschriebenen Ausführungsform ein auf "1" gesetztes Flag anzeigt, dass der erste Modus vorliegt, und ein auf "0" gesetztes Flag anzeigt, dass der zweite Modus vorliegt.

In den jeweiligen Netzknoten M sind in den oben erwähnten Weiterleitungs-Informationen zwei Felder enthalten, welche im HWMP-Protokoll als "proactive PREP" und "proactive PREP sent" bezeichnet sind. Diese Felder entsprechen den beiden Flags, die in der Druckschrift WO 2008/058933 beschrieben sind. Das Flag "proactive PREP" wird im Folgenden als erstes Feld bezeichnet und zeigt an, ob der jeweilige Netzknoten in Antwort auf eine proaktive Routing-Anfrage eine Routing-Reply aussendet. In der hier beschriebenen Ausführungsform wird eine Routing-Antwort ausgesendet, wenn das erste Feld im Zustand "1" ist, und es wird keine Routing-Antwort ausgesendet, wenn das erste Feld im Zustand "0" ist. Über das zweite Feld "proactive PREP sent", welches im Folgenden als zweites Feld bezeichnet ist, wird angezeigt, ob der jeweilige Netzknoten zuvor eine proaktive Routing-Antwort gesendet hat. In dem hier beschriebenen Ausführungsbeispiel bedeutet ein auf den Zustand "1" gesetztes zweites Feld, dass eine Routing-Antwort gesendet wurde, und ein auf den Zustand "0" gesetztes Feld, dass keine Routing-Antwort gesendet wurde. Dieses zweite Feld wird nach vorgegebenen Kriterien immer wieder in den Zustand "0" zurückgesetzt.

Die nachfolgend beschriebenen Varianten des erfindungsgemäßen Verfahrens zeichnen sich dadurch aus, dass in dem Kommunikationsnetz ein einheitlicher Mechanismus zum Betrieb in dem obigen ersten und zweiten Modus sowie zum Wechsel zwischen den Modi geschaffen wird, ohne dass explizit unterschieden werden muss, in welchem Modus das Kommunikationsnetz gerade betrieben wird.

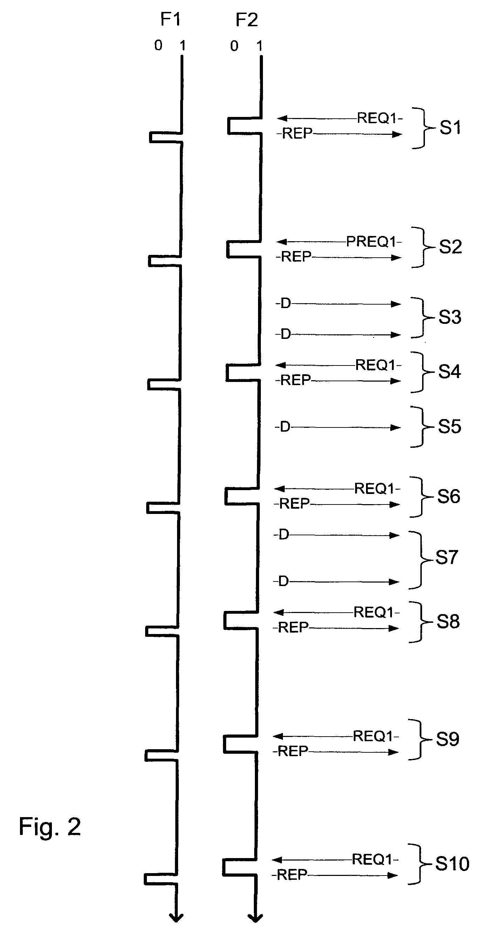

Im Nachfolgenden wird das Verfahren basierend auf zwei Ausführungsbeispielen anhand von Fig. 2 bis Fig. 5 erläutert. In diesen Figuren werden einheitliche Bezeichnungen verwendet, wobei das erste Feld "proactive PREP" eines Netzknotens M mit Bezugszeichen F1 spezifiziert ist und das zweite Feld "proactive PREP sent" eines Netzknotens M mit dem Bezugszeichen F2 bezeichnet ist. Darüber hinaus werden in den Figuren proaktive Routing-Anfragen, in denen der erste Modus über das PREP-Flag angezeigt wird, mit REQ1 bezeichnet, wohingegen Routing-Anfragen, in denen der zweite Modus über das PREQ-Flag angezeigt wird, mit REQ2 bezeichnet werden. Von einem Netzknoten M ausgesendete Daten werden in den Figuren mit D bezeichnet und entsprechend ausgesendete proaktive Pfad-Antworten mit REP. Im Folgenden handelt es sich bei den Routing-Anfragen bzw. Routing-Antworten immer um proaktive Routing-Anfragen bzw. Routing-Antworten, so dass der Zusatz "proaktiv" im Folgenden auch teilsweise weggelassen wird.

Die Figuren 2 bis 5 zeigen beispielhaft zeitliche Ablaufdiagramme betreffend einen beliebigen Netzknoten M im Kommunikationsnetz, wobei sich die Zeitachse in vertikaler Richtung nach unten erstreckt und die Zustände 0 und 1 der Felder F1 und F2 in dem Knoten M über stufenförmige Linien angezeigt werden. Darüber hinaus wird durch entsprechende Pfeile hin zu den stufenförmigen Linien der Empfang von Routing-Anfragen im Netzknoten angedeutet, wohingegen durch Pfeile in Richtung weg von den stufenförmigen Linien das Aussenden von Daten bzw. Routing-Antworten durch den Netzknoten wiedergegeben sind. Verschiedene Situationen des Aussenden bzw. des Empfangens von Routing-Nachrichten bzw. Daten werden dabei in den Figuren 2 bis 5 mit Bezugszeichen S1, S2, ..., S48 bezeichnet.

Das generelle Konzept der beiden im Folgenden beschriebenen Ausführungsformen der Erfindung kann wie folgt zusammengefasst werden:
- Es gibt keine Unterscheidung zwischen proaktiven Routing-Anfragen im Hinblick auf den darin spezifizierten ersten bzw. zweiten Modus, mit Ausnahme von einem Schritt. Das heißt, der Wert des PREP-Flags in den proaktiven Routing-Anfragen wird in der Regel nicht beachtet.
- Die Erzeugung einer proaktiven Routing-Antwort REP ist immer abhängig von dem Wert des ersten Felds in dem jeweiligen Knoten, d.h. wenn das erste Feld im Zustand "1" ist, wird immer eine Routing-Antwort REP gesendet, unabhängig davon, ob die Routing-Anfrage den ersten oder den zweiten Modus spezifiziert.
- Falls ein Netzknoten Datenpakete an den Root-Knoten R senden möchte, wird das erste Feld F1 im Netzknoten auf "1" gesetzt, und zwar unabhängig davon, ob der Root-Knoten R den ersten oder zweiten Modus in seinen Routing-Anfragen spezifiziert.
- Es wird sichergestellt, dass das erste Feld im Zustand "1" ist, falls das PREP-Feld in der zuvor empfangenen proaktiven Routing-Anfrage auf "1" gesetzt ist und damit den ersten Modus spezifiziert. Falls diese Bedingung nicht erfüllt ist, wird sichergestellt, dass das erste Feld im Zustand "0" ist.

Das soeben beschriebene generelle Konzept wird nunmehr basierend auf zwei alternativen Ausführungsbeispielen erläutert. Beide Ausführungsformen haben gemeinsam, dass ein Netzknoten, der Datenpakete an den Root-Knoten senden möchte, das erste Feld immer in den Zustand "1" setzt. Darüber hinaus stimmen die beiden Ausführungsformen dahingehend überein, dass ein Netzknoten, der Datenpakete als Quellknoten an den Root-Knoten unter Verwendung eines bidirektionalen Datenübertragungspfads senden möchte, eine proaktive Routing-Antwort vor den zu übertragenden Datenpaketen aussendet, falls das zweite Feld im Zustand "0" ist.

Die erste und zweite Ausführungsform der Erfindung unterscheiden sich in der Vorgehensweise, wie ein jeweiliger Netzknoten auf den Empfang einer proaktiven Routing-Anfrage reagiert. Gemäß der ersten Ausführungsform, welche auch als Alternative A bezeichnet wird, werden dabei folgende drei Schritte der Reihe nach durchgeführt:
1. Bei Empfang einer proaktiven Routing-Anfrage wird - unabhängig von dem in dieser Anfrage spezifizierten Modus - das zweite Feld im Netzknoten in den Zustand "0" gesetzt.
2. Anschließend wird der Zustand des ersten Felds im Netzknoten überprüft. Im Falle, dass dieses erste Feld im Zustand "1" ist, wird eine Routing-Antwort von dem Netzknoten hin zum Root-Knoten ausgesendet und das erste Feld anschließend in den Zustand "0" gesetzt. Ferner wird das zweite Feld des Netzknotens in den Zustand "1" gesetzt.
3. Anschließend wird der Zustand des PREP-Flags in der empfangenen proaktiven Routing-Anfrage überprüft. Falls gemäß diesem Flag der erste Modus spezifiziert ist, setzt der Netzknoten sein erstes Feld in den Zustand "1". Falls der zweite Modus spezifiziert ist, bleibt das erste Feld in dem Zustand "0".

In der zweiten Ausführungsform, welche im Folgenden auch als Variante B bezeichnet wird, reagiert ein Netzknoten auf den Empfang einer proaktiven Routing-Anfrage in anderer Weise und führt die folgenden Schritte nacheinander durch:
1. Bei Empfang einer proaktiven Routing-Anfrage wird zunächst überprüft, in welchem Zustand das erste Feld des empfangenden Netzknotens ist. Ist das erste Feld im ersten Zustand, wird eine proaktive Routing-Antwort von dem Netzknoten an den Root-Knoten ausgesendet und das zweite Feld des Netzknotens in den Zustand "1" gesetzt. Ist demgegenüber das erste Feld des Netzknotens in dem zweiten Zustand, wird von dem Netzknoten keine Routing-Antwort ausgesendet und das zweite Feld in den Zustand "0" gesetzt. Das erste Feld bleibt in diesem Fall im Zustand 0"
2. Anschließend wird überprüft, welcher Modus in der empfangenen Routing-Anfrage spezifiziert ist. Falls gemäß dem PREP-Flag in der Routing-Anfrage der erste Modus spezifiziert ist, setzt der Netzknoten das erste Feld in den Zustand "1". Falls in der empfangenen Routing-Anfrage gemäß dem PREP-Flag der zweite Modus spezifiziert ist, wird demgegenüber das erste Feld des Netzknotens in den Zustand "0" gesetzt. Das zweite Feld bleibt in beiden Fällen unverändert.

Fig. 2 zeigt ein zeitliches Ablaufdiagramm zur Verdeutlichung der Variante A im Falle, dass ausschließlich der erste Modus im Routing-Protokoll verwendet wird, d.h. es werden ausschließlich proaktive Routing-Anfragen REQ1 durch den Root-Netzknoten ausgesendet und bei den anderen Netzknoten empfangen. In dem Szenario der Fig. 2 ist anfänglich das Flag F1 des betrachteten Netzknotens im Zustand "1" und das Feld F2 ebenfalls im Zustand "1". Gemäß der Situation S1 wird eine proaktive Routing-Anfrage REQ1 mit spezifiziertem ersten Modus empfangen. Als Konsequenz wird das zweite Feld F2 in den Zustand "0" gesetzt, wohingegen das Feld F1 in dem Zustand "1" verbleibt. Als Konsequenz, dass das Feld F1 in dem Zustand "1" ist, erfolgt das Aussenden einer Routing-Antwort REP. Anschließend wird das zweite Feld F2 in den Zustand "1" gesetzt und das erste Feld F1 in den Zustand "0". Schließlich wird überprüft, welcher Modus in der Routing-Anfrage spezifiziert ist. Da in dieser Anfrage der erste Modus spezifiziert ist, hat dies zur Folge, dass das in den Zustand "0" gesetzte Feld F1 wieder in den Zustand "1" gesetzt wird und in diesem Zustand bei Abwesenheit von weiteren Nachrichten verbleibt.

Die Situation S2 zeigt die gleiche Situation S1, bei der die nächste Routing-Anfrage PREQ1 im betrachteten Netzknoten empfangen wird, woraufhin wiederum eine Routing-Antwort REP gesendet wird. In der Situation S3 werden zweimal Datenpakete D von dem Netzknoten an den Root-Knoten gesendet, wobei hier und in allen folgenden Ausführungen davon ausgegangen wird, dass für die Datenübermittlung ein bidirektionaler Datenpfad zu verwenden ist. Da beim Senden der Datenpakete D das zweite Feld F2 im Zustand "1" ist, wird unmittelbar vor dem Senden der Datenpakete keine Routing-Antwort ausgesendet. In der Situation S3 wird nach dem Aussenden des jeweiligen Datenpakets D das Feld F1 in den Zustand "1" gesetzt. Da das Feld F1 bereits zuvor im Zustand "1" war, wird dieser Zustand beibehalten. In der Situation S4, welche wiederum den Situationen S1 und S2 entspricht, wird eine Routing-Anfrage REQ1 empfangen und anschließend eine Routing-Antwort REP gesendet. S5 entspricht wiederum der Situation S3, wobei nunmehr einmalig Datenpakete D ausgesendet werden. Nachfolgend sind wiederum Situationen S6, S7, S8, S9 und S10 wiedergegeben, wobei die Situationen S6, S8, S9 und S10 wiederum der Situation S1 entsprechen und die Situation S7 wiederum der Situation S3.

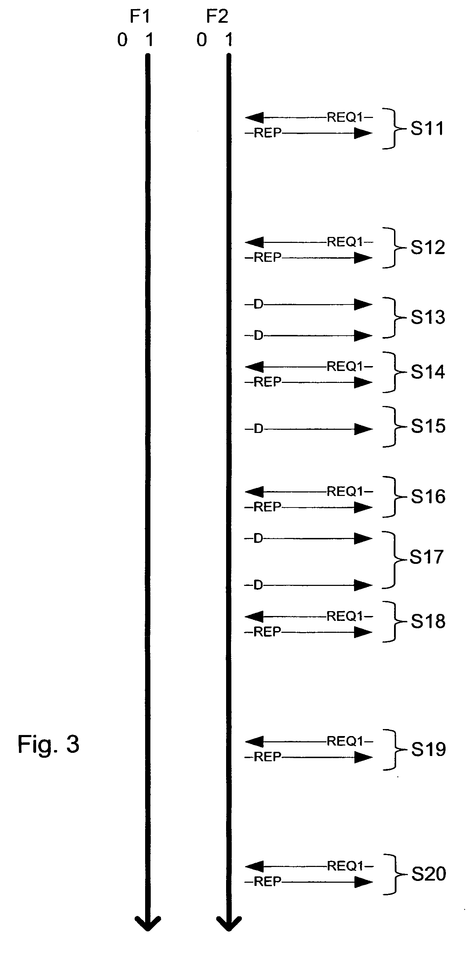

Fig. 3 zeigt ein Ablaufdiagramm für die Variante B des erfindungsgemäßen Verfahrens, wobei ein Routing nur basierend auf dem ersten Modus verwendet wird. Zu Beginn des Verfahrens ist das Feld F1 im Zustand "1" und das Feld F2 ebenfalls im Zustand "1". Bei Empfang der ersten Routing-Anfrage REQ1 in dem betrachteten Netzknoten (Situation S11) wird zunächst überprüft, in welchem Zustand das erste Feld F1 ist. Da dieses Feld im Zustand "1" ist, wird eine Routing-Antwort REP in Reaktion auf die Routing-Anfrage REQ1 ausgesendet und das zweite Feld in dem Zustand "1" gesetzt. Anschließend wird im Netzknoten überprüft, welcher Modus in der Routing-Anfrage spezifiziert ist. Da der erste Modus spezifiziert ist, hat dies zur Folge, dass das erste Feld F1 in den Zustand "1" gesetzt wird und das zweite Feld F2 in dem Zustand "1" bleibt. Da die Felder bereits vorher in dem Zustand "1" waren, wird somit der Zustand "1" für die Felder beibehalten. Die Situation S12 entspricht der Situation S11 und wird deshalb nicht nochmals erläutert. In der Situation S13 werden zweimal Datenpakete D von dem Netzknoten an den Root-Knoten übermittelt. Da beim Übermitteln der Datenpakete das zweite Feld F2 im Zustand "1" ist, wird vor dem Senden der Datenpakete D keine Routing-Antwort REP gesendet. Die Situation S14 entspricht wiederum der Situation S11. Die Situation S15 entspricht der Situation S13, wobei nunmehr jedoch nur einmalig Datenpakete D ausgesendet werden. Es folgen weitere Situationen S16 bis S20, wobei die Situationen S16, S18, S19 und S20 der Situation S11 bzw. S12 entsprechen und die Situation S17 der Situation S13 entspricht.

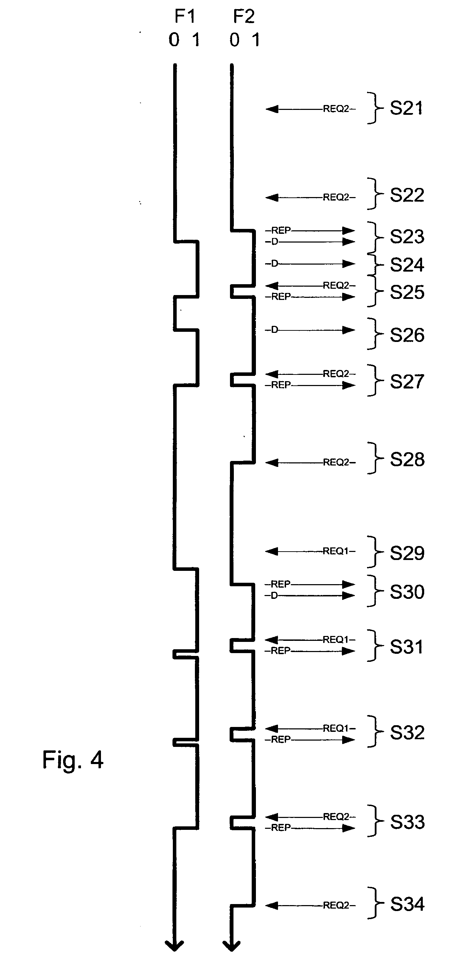

Fig. 4 zeigt ein Ablaufdiagramm gemäß der Variante A der Erfindung, wobei nunmehr zwischen dem ersten Modus und dem zweiten Modus gewechselt wird. Dabei befindet sich das Verfahren anfangs in dem zweiten Modus, bei dem Routing-Anfragen REQ2 ausgesendet werden, in denen das PREQ-Flag in dem Zustand "0" ist. Zu Beginn des Ablaufdiagramms sind das erste Feld F1 und das zweite Feld F2 des betrachteten Netzknotens im Zustand "0".

In der Situation S21 wird vom betrachteten Netzknoten eine Routing-Anfrage REQ2 empfangen. Unabhängig von dem spezifizierten Modus wird dabei zunächst das Feld F2 in den Zustand "0" gesetzt. Da das Feld F2 im Zustand "0" ist, verbleibt es somit auch in diesem Zustand. Anschließend wird der Zustand des ersten Felds überprüft. Da das erste Feld im Zustand "0" ist, wird von dem Netzknoten keine Routing-Antwort REP ausgesendet. Schließlich wird noch der in der Routing-Anfrage spezifizierte Modus überprüft. Da in der Anfrage REQ2 der zweite Modus festgelegt ist, hat dies zur Folge, dass das erste Feld F1 und das zweite Feld F2 unverändert bleiben. Die nachfolgend in Fig. 4 gezeigte Situation S22 entspricht wiederum der Situation S21 mit der Konsequenz, dass nach dem Empfang der Routing-Anfrage REQ2 keine Routing-Antwort ausgesendet wird und auch nicht die Zustände der Felder F1 und F2 verändert werden.

In der Situation S23 beabsichtigt der Netzknoten die Übertragung von Datenpaketen D. Er überprüft dabei vor Beginn der Datenübertragung zunächst den Zustand des zweiten Felds F2. Da dieses Feld im Zustand "0" ist, sendet er eine Routing-Antwort REP an den Root-Knoten, um hierdurch einen bidirektionalen Datenpfad aufzubauen. Das Aussenden der Nachricht REP hat zur Folge, dass das Flag F2 anschließend in den Zustand "1" gesetzt ist. Schließlich erfolgt die Übertragung des entsprechenden Datenpaketes D, woraufhin das erste Feld F1 unabhängig davon, welcher Modus vorliegt, in den Zustand "1" gesetzt wird. Die Situation S24 zeigt eine nochmalige Übertragung eines Datenpaketes D. Dabei wird wiederum zunächst vor der Datenübertragung der Zustand des zweiten Felds F2 überprüft. Im Unterschied zur Situation S23 ist das Feld F2 nunmehr im Zustand "1", so dass keine Routing-Antwort REP vor der Datenübertragung D ausgesendet wird. Die Datenübertragung hat wiederum zur Folge, dass anschließend das Feld F1 in den Zustand "1" gesetzt wird, wobei das Feld F1 bereits vorher in dem Zustand "1" war und demzufolge auch in diesem Zustand bleibt.

Gemäß der Situation S25 wird wiederum eine Routing-Anfrage REQ2 empfangen. Dies hat zunächst zur Konsequenz, dass das Feld F2 in den Zustand "0" gesetzt wird. Anschließend wird der Zustand des ersten Felds F1 überprüft. Da das Feld F1 in der Situation S25 im Zustand "1" ist, wird von dem Netzknoten eine Routing-Antwort REP ausgesendet und anschließend wird das erste Feld in den Zustand "0" gesetzt und das zweite Feld in den Zustand "1". Schließlich wird noch überprüft, welcher Modus in der Routing-Anfrage spezifiziert ist. Da der zweite Modus festgelegt ist, werden das erste Feld F1 und das zweite Feld F2 nicht verändert. Gemäß der Situation S26 sendet der Netzknoten wiederum Datenpakete D aus. Dabei wurde vor dem Aussenden der Datenpakete D der Zustand des zweiten Felds F2 überprüft. Im Unterschied zur Situation S23 ist das zweite Feld F2 dabei im Zustand "1". Dies hat zur Folge, dass vor dem Aussenden der Datenpakete D keine Routing-Antwort gesendet wird. Bei bzw. nach dem Senden der Datenpakete D wird das erste Feld F1 in den Zustand "1" gesetzt.

Die nachfolgende Situation S27 entspricht der Situation S25, wobei in Antwort auf den Empfang einer Routing-Anfrage REQ2 eine Routing-Antwort REP von dem Netzknoten ausgesendet wird. In der Situation S28 wird die nächste Routing-Anfrage REQ2 im Netzknoten empfangen. Zunächst wird dabei wiederum das zweite Feld F2 in den Zustand "0" gesetzt. Anschließend wird der Zustand des ersten Felds F1 überprüft. Da das erste Feld im Zustand "0" ist, wird keine Routing-Antwort von dem Netzknoten ausgesendet und der Zustand des ersten Felds F1 und des zweiten Felds F2 bleiben unverändert. Gemäß der Situation S29 wird ein Wechsel von dem zweiten in den ersten Modus initiiert. Dies erfolgt dadurch, dass nunmehr eine Routing-Anfrage REQ1 mit darin spezifiziertem erstem Modus von dem Root-Knoten ausgesendet wird. In der Situation S29 wird zunächst das Feld F2 in den Zustand "0" gesetzt, wobei bereits zuvor der Zustand "0" vorlag und somit beibehalten wird. Anschließend wird der Zustand des ersten Felds F1 überprüft. Da das erste Feld F1 im Zustand "0" ist, wird keine Routing-Antwort von dem Netzknoten ausgesendet und die Zustände der Felder F1 und F2 bleiben unverändert. Anschließend wird überprüft, welcher Modus in der Routing-Anfrage spezifiziert ist. Da nunmehr der erste Modus spezifiziert ist, hat dies zur Folge, dass das erste Feld F1 in den Zustand "1" gesetzt wird und das zweite Feld unverändert bleibt. Zwar wird in der Situation S29 beim Empfang der Routing-Anfrage REQ1 noch keine Routing-Antwort ausgesendet. Jedoch ist sichergestellt, dass bei allen späteren Routing-Anfragen eine Routing-Antwort gesendet wird, da in der Situation S29 sichergestellt wurde, dass das erste Feld F1 in den Zustand "1" gesetzt ist.

In der nachfolgenden Situation S30 beabsichtigt der Netzknoten Datenpakete D an den Root-Knoten zu senden. Vor dem Senden der Datenpakete D überprüft er dabei wiederum den Zustand des zweiten Felds F2. Da das zweite Feld im Zustand "0" ist, sendet er zunächst eine Routing-Antwort REP an den Root-Knoten, um hierdurch einen bidirektionalen Datenpfad aufzubauen. Das Senden der Routing-Antwort REP führt zum Setzen des zweiten Felds in den Zustand "1". Anschließend werden dann die Datenpakete D ausgesendet, wobei sichergestellt wird, dass nach dem Aussenden der Datenpakete D das erste Feld in dem Zustand "1" ist. Dies wird durch explizites Setzen des ersten Felds in den Zustand "1" erreicht. Da das Feld F1 bereits vor dem Aussenden der Datenpakete D in dem Zustand "1" war, verbleibt es somit in diesem Zustand. Anschließend erfolgt in der Situation S31 der Empfang einer weiteren Routing-Anfrage REQ1. Dies hat zunächst zur Folge, dass das zweite Feld F2 in den Zustand "0" gesetzt wird. Anschließend wird der Zustand des ersten Felds F1 überprüft. Da das Feld nunmehr im Zustand "1" ist, hat dies das Aussenden einer Routing-Antwort REP zur Folge. Nach dem Aussenden wird das erste Feld in den Zustand "0" gesetzt und das zweite Feld in den Zustand "1". Schließlich wird der in der Routing-Anfrage spezifizierte Modus überprüft. Da der erste Modus festgelegt ist, hat dies zur Folge, dass das erste Feld F1 wieder in den Zustand "1" zurückgesetzt wird, wohingegen das zweite Feld im Zustand "1" bleibt. Die in Fig. 4 gezeigte Situation S32 entspricht der Situation S31 und wird deshalb nicht im Detail erläutert.

In der Situation S33 wird ein Modus-Wechsel vom ersten in den zweiten Modus initiiert. Dies erfolgt durch das Aussenden einer Routing-Anfrage REQ2 mit spezifiziertem zweitem Modus. Zunächst wird nach Empfang dieser Nachricht wiederum das zweite Feld F2 in den Zustand "0" gesetzt. Anschließend wird der Zustand des ersten Felds F1 überprüft. Da das Feld F1 im Zustand "1" ist, wird eine Routing-Antwort REP ausgesendet. Anschließend wird das erste Feld in den Zustand "0" gesetzt und das zweite Feld in den Zustand "1". Anschließend wird der Modus der Routing-Anfrage überprüft. Da der zweite Modus vorliegt, werden das erste Feld und das zweite Feld nicht verändert.

Zwar hat der Empfang der Routing-Nachricht REQ2 in der Situation S33 noch das Aussenden einer Routing-Antwort zur Folge, jedoch wird bei allen späteren Routing-Anfragen REQ2 ein Aussenden entsprechender Routing-Antworten unterbunden. Dies ist in der Situation S34 gezeigt. Bei Empfang der Routing-Anfrage REQ2 setzt der Netzknoten wiederum zunächst das Feld F2 in den Zustand "0". Anschließend wird der Zustand des Felds F1 überprüft. Da das Feld nunmehr im Zustand "0" ist, wird keine Routing-Antwort ausgesendet und die Zustände der Felder F1 und F2 bleiben unverändert. Anschließend wird der in der Routing-Anfrage REQ2 spezifizierte Modus überprüft. Da in dieser Anfrage der zweite Modus spezifiziert ist, wird der Zustand des ersten Felds und des zweiten Felds nicht verändert.

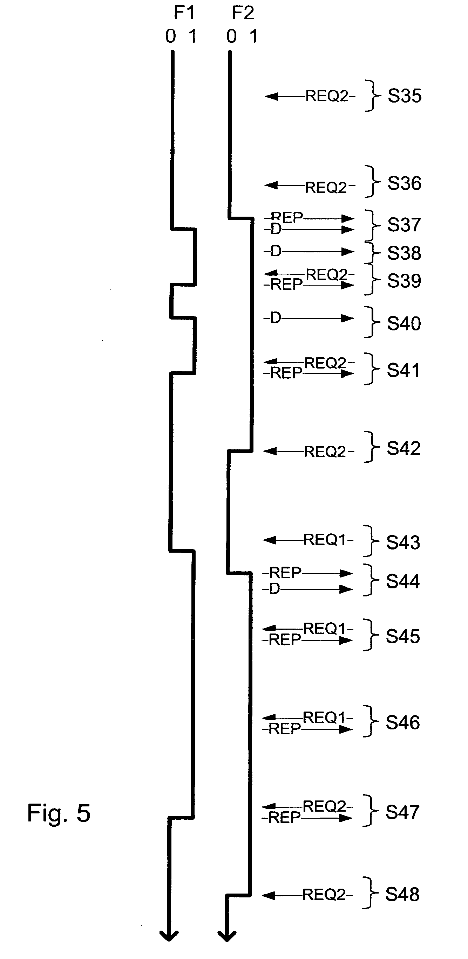

Fig. 5 zeigt ein zeitliches Ablaufdiagramm gemäß der Variante B der Erfindung, wobei ein Modus-Wechsel vom zweiten in den ersten und vom ersten in den zweiten Modus gezeigt ist. Zu Beginn des Ablaufdiagramms liegt der zweite Modus vor und das erste und zweite Feld F1 und F2 des betrachteten Netzknotens sind im Zustand "0". In der Situation S35 wird eine Routing-Anfrage REQ2 mit spezifiziertem zweiten Modus im Netzknoten empfangen. Dabei wird zunächst überprüft, in welchem Zustand das erste Feld F1 ist. Da dieses Feld im Zustand "0" ist, wird vom Netzknoten keine Routing-Antwort REP ausgesendet und das zweite Feld F2 wird in den Zustand "0" gesetzt, wobei das zweite Feld bereits zuvor im Zustand "0" ist und somit in diesem Zustand bleibt. Der Zustand des ersten Felds F1 wird nicht verändert. Die Situation S36 entspricht der Situation S35, d.h. nach Empfang der Routing-Anfrage REQ2 wird keine Antwort von dem Netzknoten ausgesendet.

In der Situation S37 beabsichtigt der Netzknoten die Übertragung von Datenpaketen D. Dabei überprüft er vor der Übertragung der Datenpakete zunächst den Zustand des zweiten Felds F2. Da das zweite Feld in dem Zustand "0" ist, sendet er eine Routing-Antwort REP vor der Übertragung des Datenpaketes D, um hierdurch einen bidirektionalen Übertragungspfad aufzubauen. In Reaktion auf das nachfolgende Senden des Datenpaketes D setzt der Netzknoten dann das Feld F1 in den Zustand "1". In der Situation S38 wird wiederum ein Datenpaket D durch den Netzknoten ausgesendet. Vor dem Aussenden des Datenpaketes D wird wiederum überprüft, in welchem Zustand das zweite Feld F2 ist. Da das zweite Feld nunmehr im Zustand "1" ist, wird zuvor keine Routing-Antwort REP ausgesendet. In Reaktion auf das Aussenden des Datenpaketes D in der Situation S38 wird wiederum das erste Feld F1 in den Zustand "1" gesetzt. Da das Feld bereits in diesem Zustand ist, ist sein Zustand nach dem Aussenden des Datenpaketes unverändert.

In der Situation S39 wird die nächste Routing-Anfrage REQ2 im Netzknoten empfangen. Wiederum überprüft der Netzknoten zunächst, in welchem Zustand das Feld F1 ist. Da das Feld im Zustand "1" ist, wird von dem Netzknoten eine Routing-Antwort REP ausgesendet. Anschließend wird das zweite Feld F2 des Netzknotens in den Zustand "1" gesetzt. Da das Feld bereits zuvor im Zustand "1" war, verbleibt es auch in diesem Zustand. Der Zustand des ersten Felds F1 wird nicht verändert. Schließlich wird überprüft, welcher Modus in der Routing-Anfrage spezifiziert ist. Da der zweite Modus spezifiziert ist, wird das erste Feld F1 in den Zustand "0" gesetzt. Der Zustand des zweiten Felds F2 wird hingegen nicht verändert.

In der Situation S40 wird durch den Netzknoten ein Datenpaket D hin zu Root-Knoten gesendet. Dabei überprüft der Netzknoten wiederum zunächst den Zustand des zweiten Feldes F2. Da das zweite Feld im Zustand "1" ist, wird vor der Datenübertragung keine Routing-Antwort REP ausgesendet. In Reaktion auf die Übertragung des Datenpaketes D wird anschließend das Feld F1 in den Zustand "1" gesetzt. In der Situation S41 wird die nächste Routing-Anfrage REQ2 im Netzknoten empfangen. Die Situation S41 entspricht dabei der Situation S39, welche oben detailliert beschrieben wurde. Zwecks Vermeidung von Wiederholungen wird auf diese Beschreibung verwiesen. In der Situation S42 wird die nächste Routing-Anfrage REQ2 im Netzknoten empfangen. Es wird dabei wiederum zunächst überprüft, in welchem Zustand das Feld F1 ist. Da dieses Feld im Zustand "0" ist, wird keine Routing-Antwort REP von dem Netzknoten ausgesendet. Anschließend wird das zweite Feld F2 in den Zustand "0" gesetzt, wohingegen das erste Feld F1 unverändert bleibt. Schließlich wird überprüft, welcher Modus in der Routing-Anfrage spezifiziert ist. Da der zweite Modus in dieser Routing-Anfrage festgelegt ist, wird das erste Feld in den Zustand "0" gesetzt, wobei dieser Zustand bereits vorher vorlag und somit unverändert ist. An dem Zustand des zweiten Feldes F2 werden keine Veränderungen vorgenommen, d.h. das zweite Feld F2 bleibt in dem Zustand "0".

In der Situation S43 erfolgt nunmehr ein Wechsel von dem zweiten in den ersten Modus. Hierzu wird von dem Root-Netzknoten eine Routing-Anfrage REQ1 mit spezifiziertem erstem Modus ausgesendet. Wiederum wird zunächst durch den Netzknoten überprüft, in welchem Zustand das erste Feld F1 ist. Da das Feld F1 in dem Zustand "0" ist, wird von dem Netzknoten keine Routing-Antwort REP ausgesendet. Ferner wird das zweite Feld F2 in den Zustand "0" gesetzt, wobei es bereits zuvor in diesem Zustand "0" war, so dass sich sein Zustand nicht verändert. Der Zustand des ersten Feldes F1 wird nicht verändert. Anschließend wird der in der Routing-Anfrage spezifizierte Modus überprüft. Da in der Routing-Anfrage der erste Modus festgelegt ist, wird das erste Feld in den Zustand "1" gesetzt. Der Zustand des zweiten Felds bleibt hingegen unverändert. In Analogie zu der in Fig. 4 beschriebenen Ausführungsform erfolgt beim Modus-Wechsel in Schritt S43 zunächst noch kein Aussenden einer Routing-Antwort REP auf die empfangene Routing-Anfrage REQ1. Da das erste Feld F1 nunmehr jedoch im Zustand "1" ist, wird sichergestellt, dass bei Empfang der nächsten Routing-Anfragen auch eine Routing-Antwort gesendet wird.

In der Situation S44 sendet der Netzknoten ein Datenpaket D an den Root-Knoten. Dabei überprüft er vor dem Senden des Datenpaketes zunächst, in welchem Zustand das zweite Feld F2 ist. Da das zweite Feld F2 in dem Zustand "0" ist, sendet es vorab eine Routing-Antwort REP, um hierdurch einen bidirektionalen Datenpfad aufzubauen. Anschließend wird das Datenpaket D gesendet. In Reaktion auf das Senden des Datenpaketes D wird dann das Feld F1 in den Zustand "1" gesetzt, wobei das Feld F1 zuvor bereits im Zustand "1" war, so dass dessen Zustand unverändert ist. In der Situation S45 wird die nächste Routing-Anfrage REQ1 im Netzknoten empfangen. Zunächst wird wieder der Zustand des Felds F1 überprüft. Da das Feld F1 nunmehr im Zustand "1" ist, wird eine Routing-Antwort REP ausgesendet. Anschließend wird das zweite Feld in den Zustand "1" gesetzt, wobei das zweite Feld bereits zuvor in dem Zustand "1" war, so dass dieser Zustand nicht verändert wird. Am Zustand des ersten Felds werden keine Veränderungen vorgenommen. Schließlich wird noch überprüft, welcher Modus in der Routing-Anfrage REQ1 spezifiziert ist. Da der erste Modus spezifiziert ist, wird das erste Feld in den Zustand "1" gesetzt, wobei das erste Feld bereits zuvor in dem Zustand "1" war, so dass keine Zustandsveränderung auftritt. Der Zustand des zweiten Felds wird demgegenüber nicht verändert. Die nachfolgende Situation S46 entspricht der Situation S45 und wird deshalb nicht mehr im Detail erläutert. Analog zur Situation S45 hat der Empfang einer Routing-Anfrage REQ1 das Aussenden einer Routing-Antwort REP zur Folge.

In der Situation S47 wird ein Wechsel von dem ersten Modus in den zweiten Modus durchgeführt. Dies wird durch das Aussenden einer Routing-Anfrage REQ2 mit spezifiziertem zweitem Modus initiiert. Bei Empfang der Routing-Anfrage REQ2 überprüft der Netzknoten zunächst wiederum den Zustand des Feldes F1. Da das Feld F1 im Zustand "1" ist, wird von dem Netzknoten eine Routing-Antwort REP ausgesendet. Ferner wird das zweite Feld in den Zustand "1" gesetzt, wobei bereits zuvor das Feld in dem Zustand "1" vorlag, so dass sich der Zustand nicht verändert. Demgegenüber werden am Feld F1 keine Veränderungen vorgenommen. Schließlich wird durch den Netzknoten noch überprüft, welcher Modus in der Routing-Anfrage spezifiziert ist. Da nunmehr der zweite Modus spezifiziert ist, wird das Feld F1 nunmehr in den Zustand "0" gesetzt. Demgegenüber wird der Zustand des zweiten Feldes F2 nicht verändert. In der Situation S47 wird beim Moduswechsel zunächst in Antwort auf die Routing-Anfrage REQ2 eine Routing-Antwort REP gesendet. Bei allen späteren Routing-Anfragen REQ2 erfolgt jedoch keine Aussendung einer Routing-Antwort mehr, da nunmehr das Feld F1 im Zustand "0" ist. Dies wird in der Situation S48 ersichtlich. Dort wird die nächste Routing-Anfrage REQ2 empfangen. Zunächst wird wiederum überprüft, in welchem Zustand das erste Feld F1 ist. Da das Feld F1 nunmehr im Zustand "0" ist, wird keine Routing-Antwort REP von dem Netzknoten ausgesendet. Ferner wird das zweite Feld in den Zustand "0" gesetzt, wohingegen der Zustand des ersten Feldes F1 unverändert bleibt.

Wie sich aus der Beschreibung der obigen Figuren 4 und 5 ergibt, hat ein Wechsel des Modus zur Folge, dass der Modus erst bei Empfang der nächsten Routing-Anfrage endgültig eingerichtet ist. Es kommt somit zu einer Verzögerung beim Einrichten des entsprechenden Modus. Um eine solche Verzögerung beim Wechsel von dem zweiten in den ersten Modus zu vermeiden, d.h. um sicherzustellen, dass bereits beim ersten Empfang einer Routing-Anfrage mit spezifiziertem ersten Modus eine Routing-Antwort gesendet wird, können die beiden oben beschriebenen Varianten um folgende Regel erweitert werden. Falls die empfangene Routing-Anfrage den ersten Modus spezifiziert und gleichzeitig das erste Feld F1 des die Routing-Anfrage empfangenden Netzknotens in dem Zustand "0" ist, wird sofort eine Routing-Antwort REP an den Root-Knoten ausgesendet. Anschließend wird sowohl das erste Feld F1 als auch das zweite Feld F2 in den Zustand "1" gesetzt.

Wie sich aus den vorangegangenen Ausführungen ergibt, wird gemäß den beiden beschriebenen Varianten ein Mechanismus geschaffen, wie der entsprechende erste und zweite Modus in dem proaktiven Tree-Building-Mode realisiert werden können. Dieser vereinheitlichte Mechanismus führt zu geringem Implementierungsaufwand und ermöglicht ferner das einfache Wechseln zwischen den beiden Modi.

## Patentansprüche

1. Verfahren zum Austausch von Routing-Nachrichten in einem drahtlosen vermaschten Kommunikationsnetz mit einer Mehrzahl von Netzknoten (M, R), wobei in dem Kommunikationsnetz ein Routing-Baum mit Datenübertragungspfaden zwischen den Netzknoten (M, R) aufgebaut wird und einer der Netzknoten ein Root-Knoten (R) ist, der die Wurzel des Routing-Baums darstellt, bei dem:
- der Root-Knoten (R) in regelmäßigen Zeitabständen an die Netzknoten (M) Routing-Anfragen (REQ1, REQ2) zum Aufbau der Datenübertragungspfade aussendet, wobei in einer jeweiligen Routing-Anfrage (REQ1, REQ2) ein erster Modus zum Aufbau bidirektionaler Datenübertragungspfade oder ein zweiter Modus zum Aufbau unidirektionaler Datenübertragungspfade spezifiziert ist;
- in einem jeweiligen Netzknoten (M) über ein erstes Feld (F1) ein erster oder ein zweiter Zustand des jeweiligen Netzknotens (M) angezeigt wird;
- falls bei Empfang einer Routing-Anfrage (REQ1, REQ2) in einem jeweiligen Netzknoten (M) das erste Feld (F1) des jeweiligen Netzknotens (M) in dem ersten Zustand ist, immer eine Routing-Antwort (REP) von dem jeweiligen Netzknoten (M) ausgesendet wird und ansonsten keine Routing-Antwort (REP) von dem jeweiligen Netzknoten (M) ausgesendet wird, wobei anschließend durch den jeweiligen Netzknoten (M) der in der empfangenen Routing-Anfrage (REQ1, REQ2) spezifizierte Modus überprüft wird, wobei sichergestellt wird, dass das erste Feld (F1) in dem ersten Zustand ist, falls die empfangene Routing-Anfrage (REQ1, REQ2) den ersten Modus spezifiziert, und ansonsten sichergestellt wird, dass das erste Feld (F1) in dem zweiten Zustand ist;
- durch einen jeweiligen Netzknoten (M) im Falle einer Datenübertragung von dem jeweiligen Netzknoten (M) hin zum Root-Knoten (R) sichergestellt wird, dass das erste Feld (F1) des jeweiligen Netzknotens (M) anschließend im ersten Zustand ist.

2. Verfahren nach Anspruch 1, bei dem in einem jeweiligen Netzknoten (M) über ein zweites Feld (F2) ein dritter oder ein vierter Zustand des jeweiligen Netzknotens (M) angezeigt wird, wobei der jeweilige Netzknoten (M) das zweite Feld (F2) nach dem Aussenden einer Routing-Antwort (REP) in den dritten Zustand setzt.

3. Verfahren nach Anspruch 2, bei dem in einem jeweiligen Netzknoten (M) in Reaktion auf den Empfang einer Routing-Anfrage (REQ1, REQ2) immer folgende Schritte a) bis c) nacheinander ausgeführt werden:
a) Setzen des zweiten Feldes (F2) des jeweiligen Netzknotens (M) in den vierten Zustand;
b) Überprüfen, in welchem Zustand das erste Feld (F1) des jeweiligen Netzknotens (M) ist, wobei
- falls das erste Feld (F1) in dem ersten Zustand ist, von dem jeweiligen Netzknoten (M) eine Routing-Antwort (REP) ausgesendet wird und anschließend das erste Feld (F1) (F1) in den zweiten Zustand gesetzt wird und das zweite Feld (F2) in den dritten Zustand gesetzt wird;
- falls das erste Feld (F1) in dem zweiten Zustand ist, von dem jeweiligen Netzknoten (M) keine Routing-Antwort (REP) ausgesendet wird und das erste Feld (F1) und das zweite Feld (F2) unverändert bleiben;
c) Überprüfen, welcher Modus in der empfangenen Routing-Anfrage (REQ1, REQ2) spezifiziert ist, wobei
- falls in der empfangenen Routing-Anfrage (REQ1, REQ2) der erste Modus spezifiziert ist, das erste Feld (F1) in den ersten Zustand gesetzt wird und das zweite Feld (F2) unverändert bleibt;
- falls in der empfangenen Routing-Anfrage (REQ1, REQ2) der zweite Modus spezifiziert ist, das erste Feld (F1) und das zweite Feld (F2) unverändert bleiben.

4. Verfahren nach Anspruch 2, bei dem in einem jeweiligen Netzknoten (M) in Reaktion auf den Empfang einer Routing-Anfrage (REQ1, REQ2) immer folgende Schritte i) und ii) nacheinander ausgeführt werden:
i) Überprüfen, in welchem Zustand das erste Feld (F1) des jeweilige Netzknotens (M) ist, wobei
- falls das erste Feld (F1) in dem ersten Zustand ist, von dem jeweiligen Netzknoten (M) eine Routing-Antwort (REP) ausgesendet wird, das zweite Feld (F2) des jeweiligen Netzknotens (M) in den dritten Zustand gesetzt wird und das erste Feld (F1) unverändert bleibt;
- falls das erste Feld (F1) in dem zweiten Zustand ist, von dem jeweiligen Netzknoten (M) keine Routing-Antwort (REP) ausgesendet wird und das zweite Feld (F2) in den vierten Zustand gesetzt wird und das erste Feld (F1) unverändert bleibt;
ii) Überprüfen, welcher Modus in der empfangenen Routing-Anfrage (REQ1, REQ2) spezifiziert ist, wobei
- falls in der empfangenen Routing-Anfrage (REQ1, REQ2) der erste Modus spezifiziert ist, das erste Feld (F1) in den ersten Zustand gesetzt wird und das zweite Feld (F2) unverändert bleibt;
- falls in der empfangenen Routing-Anfrage (REQ1, REQ2) der zweite Modus spezifiziert ist, das erste Feld (F1) in den zweiten Zustand gesetzt wird und das zweite Feld (F2) unverändert bleibt.

5. Verfahren nach einem der Ansprüche 2 bis 4, bei dem ein jeweiliger Netzknoten (M) in Abhängigkeit von einem oder mehreren Kriterien und insbesondere immer folgenden Schritt ausführt:
Senden einer Routing-Antwort (REP) vor Beginn einer Datenübertragung von dem jeweiligen Netzknoten (M) hin zum Root-Knoten (R), falls das zweite Feld (F2) des jeweiligen Netzknotens (M) in dem vierten Zustand ist.

6. Verfahren nach einem der vorhergehenden Ansprüche, bei dem bei Vorliegen der Bedingung, dass in einem jeweiligen Netzknoten (M) eine Routing-Anfrage (REQ1, REQ2) mit spezifiziertem ersten Modus empfangen wird und das erste Feld (F1) im zweiten Zustand ist, eine Routing-Antwort (REP) in Reaktion auf die empfangene Routing-Anfrage (REQ1, REQ2) von dem jeweiligen Netzknoten (M) ausgesendet wird.

7. Verfahren nach Anspruch 6, wenn abhängig von Anspruch 2, bei dem bei Vorliegen der Bedingung, dass in einem jeweiligen Netzknoten (M) eine Routing-Anfrage (REQ1, REQ2) mit spezifiziertem ersten Modus empfangen wird und das erste Feld (F1) im zweiten Zustand ist, ferner nach dem Aussenden der Routing-Antwort (REP) in dem jeweiligen Netzknoten (M) das erste Feld (F1) in den ersten Zustand gesetzt wird und das zweite Feld (F2) in den dritten Zustand gesetzt wird.

8. Verfahren nach einem der vorhergehenden Ansprüche, bei dem das Kommunikationsnetz nach dem Standard IEEE 802.11s arbeitet und die Routing-Anfragen (REQ1, REQ2) und Routing-Antworten (REP) proaktive Path-Requests und Path-Replies gemäß dem HWMP-Protokoll (HWMP = Hybrid Wireless Mesh Protocol) dieses Standards sind.

9. Verfahren nach einem der vorhergehenden Ansprüche, bei dem der erste und zweite Modus in der Routing-Anfrage (REQ1, REQ2) und/oder der erste und zweite Zustand des ersten Felds (F1) eines jeweiligen Netzknotens (M) und/oder der dritte und vierte Zustand des zweiten Felds (F2) eines jeweiligen Netzknotens (M) über den Zustand eines Flags spezifiziert werden.

10. Netzknoten (M) zur Verwendung in einem drahtlosen vermaschten Kommunikationsnetz, in dem ein Verfahren nach einem der vorhergehenden Ansprüche durchgeführt wird, wobei in dem Kommunikationsnetz ein Routing-Baum mit Datenübertragungspfaden zwischen den Netzknoten (M, R) aufgebaut wird und einer der Netzknoten ein Root-Knoten (R) ist, der die Wurzel des Routing-Baums darstellt, wobei der Netzknoten (M) umfasst:
- ein erstes Mittel zum Empfangen von Routing-Anfragen (REQ1, REQ2), die der Root-Knoten (R) in regelmäßigen Zeitabständen an die Netzknoten (M) zum Aufbau der Datenübertragungspfade aussendet, wobei in einer jeweiligen Routing-Anfrage (REQ1, REQ2) ein erster Modus zum Aufbau bidirektionaler Datenübertragungspfade oder ein zweiter Modus zum Aufbau unidirektionaler Datenübertragungspfade spezifiziert ist;
- ein zweites Mittel zum Setzen eines ersten oder zweiten Zustands in einem ersten Feld (F1);
- ein drittes Mittel zum Aussenden von Routing-Antworten (REP), welches derart ausgestaltet ist, dass, falls bei Empfang einer Routing-Anfrage (REQ1, REQ2) durch das erste Mittel das erste Feld (F1) des Netzknotens (M) in dem ersten Zustand ist, immer eine Routing-Antwort (REP) durch das dritte Mittel ausgesendet wird und ansonsten keine Routing-Antwort (REP) durch das dritte Mittel ausgesendet wird, wobei anschließend der in der empfangenen Routing-Anfrage (REQ1, REQ2) spezifizierte Modus überprüft wird, wobei sichergestellt wird, dass das erste Feld (F1) im ersten Zustand ist, falls die empfangene Routing-Anfrage (REQ1, REQ2) den ersten Modus spezifiziert, und ansonsten sichergestellt wird, dass das erste Feld (F1) im zweiten Zustand ist, wobei ferner sichergestellt wird, dass im Falle einer Datenübertragung von dem Netzknoten (M) hin zum Root-Knoten (R) das erste Feld (F1) anschließend im ersten Zustand ist.

11. Netzknoten (M) nach Anspruch 10, welcher ein oder mehrere weitere Mittel zur Durchführung eines Verfahrens nach einem der Ansprüche 2 bis 9 umfasst.

12. Drahtloses vermaschtes Kommunikationsnetz mit einer Mehrzahl von Netzknoten (R, M), in dem die Netzknoten (R, M) zur Durchführung eines Verfahrens nach einem der Ansprüche 1 bis 9 eingerichtet sind.

## Claims

1. Method for exchange of routing messages in a wireless meshed communication network with a plurality of network nodes (M, R), with a routing tree with data transmission paths between the network nodes (M, R) being established in the communication network and one of the network nodes being a root node (R) which represents the root of the routing tree, in which:
- the root node (R) sends routing requests (REQ1, REQ2) at regular intervals to the network nodes (M) for establishing the data transmission paths, with a first mode for setting up bidirectional data transmission paths or a second mode for setting up unidirectional data transmission paths being specified in the respective routing request (REQ1, REQ2);
- a first or second state of the respective network node (M) is displayed by a first field (F1) in the respective network node (M);
- if, on receipt of a routing request (REQ1, REQ2) in a respective network node (M), the first field (F1) of the respective network node (M) is in the first state, a routing reply (REP) is always sent out by the respective network node (M), otherwise no routing reply (REP) is sent out by the respective network node (M), with the mode specified in the received routing request (REQ1, REQ2) being checked by the respective network node (M), with it being ensured that the first field (F1) is in the first state if the received routing request (REQ1, REQ2) specifies the first mode and otherwise it being ensured that the first field (F1) is in the second state;
- it is ensured by respective network node (M), in the event of a data transmission from the respective network node (M) through to the root node (R,) that the first field (F1) of the respective network node (M) is subsequently in the first state.

2. Method according to claim 1, in which in a respective network node (M) a third or fourth state of the respective network node (M) is displayed by a second field (F2), with the respective network node (M) setting the second field (F2) to the third state after the sending out of a routing reply (REP).

3. Method according to claim 2 in which, in a respective network node (M), as a reaction to the receipt of a routing request (REQ1, REQ2), the following steps: a) to c) are always executed one after the other:
a) Setting the second field (F2) of the respective network node (M) to the fourth state;
b) Checking the state of the first field (F1) of the respective network node (M), whereby
- if the first field (F1) is in the first state, a routing reply (REP) is sent out by the respective network node (M) and subsequently the first field (F1)(F1) is set to the first state and the second field (F2) is set the third state;
- if the first field (F1) is in the second state, no routing reply (REP) is sent out by the respective network node (M) and the first field (F1) and the second field (F2) remain unchanged;
c) Checking the mode which is specified in the received routing request (REQ1, REQ2), whereby
- if the first mode is specified in the received routing request (REQ1, REQ2), the first field (F1) is set to the first state and the second field (F2) remains unchanged;
- if the second mode is specified in the received routing request (REQ1, REQ2), the first field (F1) and the second field (F2) remain unchanged.

4. Method according to claim 2, in which in a respective network node (M) as a reaction to the receipt of a routing request (REQ1, REQ2) the following steps: i) and ii) are always executed one after the other:
i) Checking the state of the first field (F1) of the respective network node (M), whereby
- if the first field (F1) is in the first state a routing reply (REP) is sent out by the respective network node (M), the second field (F2) of the respective network node (M) is set to the third state and the first field (F1) remains unchanged;
- if the first field (F1) is in the second state, no routing reply (REP) is sent out by the respective network node (M) and the second field (F2) is set to the fourth state and the first field (F1) remains unchanged;
ii) Checking the mode which is specified in the received routing request (REQ1, REQ2), whereby
- if the first mode is specified in the received routing request (REQ1, REQ2), the first field (F1) is set to the first state and the second field (F2) remains unchanged;
- if the second mode is specified in the received routing request (REQ1, REQ2), the first field (F1) is set to the second state and the second field (F2) remains unchanged.

5. Method according to one of claims 2 to 4, in which a respective network node (M), depending on one or more criteria and especially always executes the following step:
Sending a routing reply (REP) before the beginning of the data transmission from the respective network node (M) through to the root node (R) if the second field (F2) of the respective network node (M) is in the fourth state.

6. Method according to one of the previous claims, in which, if the condition obtains that in a respective network node (M) a routing request (REQ1, REQ2) with a specified first mode is received and the first field (F1) is in the second state, a routing reply (REP) is sent out by the respective network node (M) as a reaction to the received routing request (REQ1, REQ2).

7. Method according to claim 6 if, depending on claim 2, in which if the condition obtains that in a respective network node (M) a routing request (REQ1, REQ2) with a specified first mode is received and the first field (F1) is in the second state, after the sending out of the routing reply (REP) in the second network node (M) the first field (F1) is also set to the first state and the second field (F2) is set to the third state.

8. Method according to one of the preceding claims, in which the communication network operates in accordance with Standard IEEE 802.11s and the routing requests (REQ1, REQ2) and routing replies (REP) are proactive path requests and path replies in accordance with the HWMP (HWMP = Hybrid Wireless Mesh Protocol) of this Standard.

9. Method according to one of the preceding claims, in which the first and second mode in the routing request (REQ1, REQ2) and/or the first and second state of the first field (F1) of a respective network node (M) and/or the third and fourth state of the second field (F2) of a respective network node (M) are specified by way of the state of a flag.

10. Network node (M) for use in a wireless meshed communication network, in which a method according to one of the preceding claims is carried out, with a routing tree being established in the communication network with data transmission paths between the network nodes (M, R) and one of the network nodes being a root node (R) which represents the root of the routing tree, with the network node (M) comprising:
- a first means for receiving routing requests (REQ1, REQ2), which the root node (R) sends out at regular intervals to the network nodes (M) for setting up the data transmission paths, with a first mode for setting up bidirectional data transmission paths or a second mode for setting up unidirectional data transmission paths being specified in a respective routing request (REQ1, REQ2);
- a second means for setting a first or second state in a first field (F1);
- a third means for sending out routing replies (REP), which is designed such that, if on receipt of a routing request (REQ1, REQ2) by the first means, the first field (F1) of the network node (M) is in the first state, a routing reply (REP) is always sent out by the third means and otherwise no routing reply (REP) is sent out by the third means, with the mode specified in the received routing request (REQ1, REQ2) subsequently being checked, with it being ensured that the first field (F1) is in the first state if the received routing request (REQ1, REQ2) specifies the first mode, and it being ensured otherwise that the first field (F1) is in the second state, with it further being insured that in the event of a data transmission from the network node (M) through to the root node (R) the first field (F1) is subsequently in the first state.

11. Network node (M) according to claim 10, which comprises one or more further means for carrying out the method according to one of claims 2 to 9.

12. Wireless meshed communication network with a plurality of network nodes (R, M), in which the network nodes (R, M) are configured for carrying out a method according to one of claims 1 to 9.

## Revendications

1. Procédé d'échange d'informations de routage dans un réseau de communication maillé sans fil avec une pluralité de noeuds de réseau (M, R), une arborescence de routage avec des chemins de transmission de données entre les noeuds de réseau (M, R) étant établie dans le réseau de communication et l'un des noeuds de réseau étant un noeud racine (R) qui représente la racine de l'arborescence de routage, dans lequel :
- le noeud racine (R) envoie des requêtes de routage (REQ1, REQ2) à intervalles de temps réguliers aux noeuds de réseau (M) pour établir les chemins de transmission de données, un premier mode pour l'établissement de chemins bidirectionnels pour la transmission de données ou un deuxième mode pour l'établissement de chemins unidirectionnels pour la transmission de données étant spécifié dans une requête de routage respective (REQ1, REQ2) ;
- un premier ou un deuxième état du noeud de réseau respectif (M) est affiché dans un noeud de réseau respectif (M) via un premier champ ;
- si, à la réception d'une requête de routage (REQ1, REQ2) dans un noeud de réseau respectif (M), le premier champ (F1) du noeud de réseau respectif (M) est dans le premier état, le noeud de réseau respectif (M) émet toujours une réponse de routage (REP) et le noeud de réseau respectif (M) n'émet autrement pas de réponse de routage (REP), le noeud de réseau respectif (M) vérifiant ensuite le mode spécifié dans la requête de routage reçue (REQ1, REQ2), tout en étant qu'il est assuré que le premier champ (F1) est dans le premier état si la requête de routage reçue (REQ1, REQ2) spécifie le premier mode et qu'il est autrement assuré que le premier champ (F1) est dans le deuxième état ;
- un noeud de réseau respectif (M) assure, dans le cas d'une transmission de données du noeud de réseau respectif (M) vers le noeud racine (R), que le premier champ (F1) du noeud de réseau respectif (M) est ensuite dans le premier état.

2. Procédé selon la revendication 1, dans lequel un troisième ou un quatrième état du noeud de réseau respectif (M) est affiché dans un noeud de réseau respectif (M) via un deuxième champ (F2), le noeud de réseau respectif (M) forçant le deuxième champ (F2) au troisième état après l'émission d'une réponse de routage (REP).

3. Procédé selon la revendication 2, dans lequel sont toujours exécutées successivement, dans un noeud de réseau respectif (M) en réaction à la réception d'une requête de routage (REQ1, REQ2), les étapes a) à c) suivantes :
a) forcer le deuxième champ (F2) du noeud de réseau respectif (M) au quatrième état ;
b) vérifier dans quel état se trouve le premier champ (F1) du noeud de réseau respectif (M),
- une réponse de routage (REP) étant émise par le noeud de réseau respectif (M) et, ensuite, le premier champ (F1) étant forcé au deuxième état et le deuxième champ (F2) étant forcé au troisième état si le premier champ (F1) est dans le premier état ;
- aucune réponse de routage (REP) n'étant émise par le noeud de réseau respectif (M) et le premier champ (F1) et le deuxième champ (F2) restant inchangés si le premier champ (F1) est dans le deuxième état ;
c) vérifier quel est le mode spécifié dans la requête de routage reçue (REQ1, REQ2),
- le premier champ (F1) étant forcé au premier état et le deuxième champ (F2) restant inchangé si le premier mode est spécifié dans la requête de routage reçue (REQ1, REQ2) ;
- le premier champ (F1) et le deuxième champ (F2) restant inchangés si le deuxième mode est spécifié dans la requête de routage reçue (REQ1, REQ2).

4. Procédé selon la revendication 2, dans lequel sont toujours exécutées successivement, dans un noeud de réseau respectif (M), en réaction à la réception d'une requête de routage (REQ1, REQ2), les étapes suivantes i) et ii) _{:}
i) vérifier dans quel état se trouve le premier champ (F1) du noeud de réseau respectif (M),
- une réponse de routage (REP) étant émise par le noeud de réseau respectif (M), le deuxième champ (F2) du noeud de réseau respectif (M) étant forcé au troisième état et le premier champ (F1) restant inchangé si le premier champ (F1) est dans le premier état ;
- aucune réponse de routage (REP) n'étant émise par le noeud de réseau respectif (M) et le deuxième champ (F2) étant forcé au quatrième état et le premier champ (F1) restant inchangé si le premier champ (F1) est dans le deuxième état ;
ii) vérifier quel est le mode spécifié dans la requête de routage reçue (REQ1, REQ2),
- le premier champ (F1) étant forcé au premier état et le deuxième champ (F2) restant inchangé si le premier mode est spécifié dans la requête de routage reçue (REQ1, REQ2) ;
- le premier champ (F1) étant forcé au deuxième état et le deuxième champ (F2) restant inchangé si le deuxième mode est spécifié dans la requête de routage reçue (REQ1, REQ2).

5. Procédé selon l'une des revendications 2 à 4, dans lequel un noeud de réseau respectif (M) exécute l'étape suivante en fonction d'un ou de plusieurs critères, et plus particulièrement dans chaque cas :
- envoyer une réponse de routage (REP) avant le début d'une transmission de données du noeud de réseau respectif (M) vers le noeud racine (R) si le deuxième champ (F2) du noeud de réseau respectif (M) est dans le quatrième état.

6. Procédé selon l'une des revendications précédentes, dans lequel une réponse de routage (REP) est émise par le noeud de réseau respectif (M) en réaction à la requête de routage reçue (REQ1, REQ2) en présence de la condition que, dans un noeud de réseau respectif (M), soit reçue une requête de routage (REQ1, REQW2) avec le premier mode spécifié et le premier champ (F1) est dans le deuxième état.

7. Procédé selon la revendication 6, si dépendante de la revendication 2, dans lequel le premier champ (F1) est forcé au premier état et le deuxième champ (F2) est forcé au troisième état dans le noeud de réseau respectif (M) en présence de la condition que soit reçue, dans un noeud de réseau respectif (M), une requête de routage (REQ1, REQ2) avec le premier mode spécifié et que le premier champ (F1) soit dans le deuxième état et, en outre, après l'émission de la réponse de routage (REP).

8. Procédé selon l'une des revendications précédentes, dans lequel le réseau de communication fonctionne selon la norme IEEE 802.11s et les requêtes de routage (REQ1, REQ2) et les réponses de routage (REP) sont des Path Requests et des Path Replies proactives selon le protocole HWMP (HWMP = Hybrid Wireless Mesh Protocol) de cette norme.

9. Procédé selon l'une des revendications précédentes, dans lequel sont spécifiés, via l'état d'un drapeau, le premier et le deuxième mode dans la requête de routage (REQ1, REQ2) et/ou le premier et le deuxième état du premier champ (F1) d'un noeud de réseau respectif (M) et/ou le troisième et le quatrième état du deuxième champ (F2) d'un noeud de réseau respectif (M).

10. Noeud de réseau (M) destiné à être utilisé dans un réseau de communication maillé sans fil, dans lequel est exécuté un procédé selon l'une des revendications précédentes, une arborescence de routage avec des chemins de transmission de données entre les noeuds de réseau (M, R) étant établie dans le réseau de communication et l'un des noeuds de réseau étant un noeud racine (R) qui représente la racine de l'arborescence de routage, le noeud de réseau (M) comprenant :
- un premier moyen pour recevoir des requêtes de routage (REQ1, REQ2) que le noeud racine (R) envoie à intervalles de temps réguliers aux noeuds de réseau (M) pour établir les chemins de transmission de données, un premier mode pour l'établissement de chemins bidirectionnels pour la transmission de données ou un deuxième mode pour l'établissement de chemins unidirectionnels pour la transmission de données étant spécifié dans une requête de routage respective (REQ1, REQ2) ;
- un deuxième moyen pour le forçage à un premier ou un deuxième état dans un premier champ (F1) ;
- un troisième moyen pour émettre des réponses de routage (REP), lequel est réalisé de manière telle que, si le premier champ (F1) du noeud de réseau respectif (M) est dans le premier état à la réception d'une requête de routage (REQ1, REQ2) par le premier moyen, le troisième moyen émet toujours une réponse de routage (REP) et qu'autrement aucune réponse de routage (REP) n'est émise par le troisième moyen, le mode spécifié dans la requête de routage reçue (REQ1, REQ2) étant ensuite vérifié, tout en étant qu'il est assuré que le premier champ (F1) est dans le premier état si la requête de routage reçue (REQ1, REQ2) spécifie le premier mode et qu'il est autrement assuré que le premier champ (F1) est dans le deuxième état et qu'il est en outre assuré que dans le cas d'une transmission de données du noeud de réseau (M) vers le noeud racine (R), le premier champ (F1) est ensuite forcé dans le premier état.

11. Noeud de réseau (M) selon la revendication 10, lequel comprend un ou plusieurs autres moyens pour exécuter un procédé selon l'une des revendications 2 à 9.

12. Réseau de communication maillé sans fil avec une pluralité de noeuds de réseau (R, M), dans lequel les noeuds de réseau (R, M) sont aménagés pour exécuter un procédé selon l'une des revendications 1 à 9.
